# EUROPÄISCHE PATENTSCHRIFT

(11) **EP 0 943 888 B1**
(45) Veröffentlichungstag und Bekanntmachung des Hinweises auf die Patenterteilung: **08.09.2004**
(21) Anmeldenummer: 99104419.9
(22) Anmeldetag: 05.03.1999
(51) Int. Cl.: G01B 7/14

(54) **Einrichtung zum Überwachen des Abstandes zwischen zwei relativ zueinander beweglichen Teilen**
Device for monitoring the distance between two pieces moveable relative to each other
Dispositif pour surveiller la distance de deux pièces mobiles l'une par rapport à l'autre

(30) Priorität: 20.03.1998 DE 19812271
(43) Veröffentlichungstag der Anmeldung: 22.09.1999
(73) Patentinhaber: DEERE & COMPANY, Moline, Illinois 61265-8098 (US)
(72) Erfinder: Voigt, Burkhard Prof.Dr., 68163 Mannheim (DE); Schäfer, Hagen Dipl.-Ing., 64289 Darmstadt (DE); Braun, Markus Dipl.-Ing., 76646 Bruchsal (DE)
(74) Vertreter: Magin, Ludwig Bernhard

(56) Entgegenhaltungen:
- EP-A- 0 170 709
- EP-A- 0 684 454
- EP-A- 0 896 205
- DE-A- 2 943 837

## Beschreibung

Die Erfindung betrifft eine Einrichtung zum Überwachen des Abstandes zwischen einem ersten Teil und einem zweiten Teil, die relativ zueinander beweglich sind, wobei der zweite Teil, zu dem der Abstand zu messen ist, aus magnetisch leitendem Material besteht und der erste Teil wenigstens einen Permanentmagneten und eine Induktionsspule zur Erzeugung eines dem Abstand entsprechenden elektrischen Signals aufweist, das einem Auswertekreis zugeführt wird.

Es sind mehrere Möglichkeiten bekannt, um den Abstand zwischen Messern und Gegenschneide zu ermitteln. Eine Methode, die z. B. in der US-PS-36 41 421 vorgestellt ist, benutzt kapazitive Meßfühler zur Ermittlung der Kapazität der aus Messern und Gegenschneide bestehenden Vorrichtung, wozu ein hohes Potential erforderlich ist und folglich eine gegenseitige Isolation der relativ zueinander bewegten Komponenten. Nicht nur durch eine Änderung des Abstands zwischen Messer und Gegenschneide kann die Kapazität variieren. Auch durch eine Veränderung des zu schneidenden Materials in seiner Beschaffenheit, z. B. bei eintretender Nässe, kann es zu Kapazitätsschwankungen kommen.

In der EP-A-02 91 216 wird ein akustischer Sensor in der Form eines Klopfsensors vorgeschlagen. Er registriert die mechanischen Kontakte von Messern und Gegenschneide. Dabei werden die 'Klopfsignale' in digitale Signale konvertiert. Um eine parallele Einstellung der Endkanten der Messer und der Gegenschneide zu ermöglichen, können die beiden Enden der Gegenschneide abwechselnd an die Messer herangeführt werden.

Andere Verfahren beruhen auf einer Strommessung, wie es z. B. in der EP-A-06 79 330 gezeigt ist. Fließt beim Anlegen einer konstanten Versorgungsspannung ein Strom durch die Gegenschneide und eine Motorvorrichtung, die die Gegenschneide in ihrer Lage verändert, kann ein Kontakt zwischen einem Messer und der Gegenschneide anhand einer Änderung der Stromamplitude festgestellt werden, da sich in diesem Fall der ohmsche Widerstand verändert. Falls die Stromamplitude ober- oder unterhalb vorgegebener Grenzen innerhalb eines bestimmten Zeitintervalls liegt, wird der Motorbetrieb unterbrochen. Gemäß der DE-OS-33 45 749 ist es auch möglich, die Abstandsmessung anhand eines Spannungsdurchschlags zwischen der Gegenschneide und den Messern vorzunehmen. Dazu ist eine Hochspannung erforderlich.

In der DE-A-35 35 902 ist ein opto-elektronischer Sensor zur Abstandsmessung vorgeschlagen.

Darüber hinaus ist die Verwendung induktiver Meßfühler bekannt. Diese arbeiten auf zwei bekannte Weisen. In der ersten Ausführung werden entstehende Wirbelströme am bewegten Objekt gemessen. Dabei handelt es sich um induktive Felder sehr geringer Stärke. In der zweiten und häufiger verwendeten Ausführungsform, die auch in der vorliegenden Erfindung benutzt wird, werden an der Gegenschneide Induktionsspulen angebracht, in denen eine Spannung induziert wird, wenn durch die gegenseitige Bewegung von Messern und der Gegenschneide bestehende Magnetfelder unterbrochen werden, was z. B. in der DE-A-29 43 837, EP-A-00 72 016 und der US-41 98 006 gezeigt ist. Die dazu erforderlichen großen Magnetfelder werden durch einen oder mehrere Permanentmagneten erzeugt, die in der Gegenschneide untergebracht sind. Die durch den oder die Permanentmagneten erzeugten Magnetfelder müssen wesentlich größer sein als die durch die Eigenmagnetisierung der Messer erzeugten Magnetfelder. Die Signale sind abhängig von der Spaltbreite und der Geschwindigkeit, mit der die Messer die Gegenschneide passieren. Durch elektronische Integrationseinrichtungen ist es möglich, ein von dieser Geschwindigkeit unabhängiges Signal zu erhalten und die Annäherungssensoren individuell anzusteuern, sofern mehrere Annäherungssensoren entlang der Gegenschneide eingesetzt werden. Prinzipiell ist mit einer entsprechenden elektronischen Einrichtung zur Auswertung der Signale auch eine Kontrolle möglich, ob Messer fehlen oder abgebrochen sind.

Das der Erfindung zugrunde liegende Problem wird darin gesehen, daß sich in der herkömmlichen Vorgehensweise eine Verschlechterung der Qualität der Permanentmagnete ungünstig auf die Empfindlichkeit der Abstandsmessung auswirkt.

Dieses Probleme wird erfindungsgemäß gelöst durch die Lehre des Anspruches 1, wobei in den weiteren Patentansprüchen Merkmale genannt sind, die die Lösung in vorteilhafter Weise weiterentwickeln.

Zur Überwachung des Abstandes zwischen einem ersten und einem zweiten relativ dazu beweglichen Teil, mit wenigstens einem Permanentmagneten und einer Induktionsspule wird das an der Induktionsspule abgegriffene Signal in der Form eines Spannungspulses in einen hoch- und einen tieffrequenten Anteil zerlegt und daraus ein Quotient gebildet. Im folgenden wird stets davon ausgegangen, daß die Richtung der Quotientenbildung keine Rolle spielt, d. h. es kann grundsätzlich auch der tieffrequente- durch den hochfrequenten Anteil dividiert werden. Die Trennung in hoch- und tieffrequente Signalanteile hat den Vorteil, daß Abstandsänderungen zwischen Messern und Gegenschneide empfindlicher registriert werden können. Während der niederfrequente Signalanteil bei Abstandsänderungen nahezu unverändert empfangen wird, ist der hochfrequente Signalanteil umgekehrt proportional zum Abstand zwischen Messern und Gegenschneide. Er kann daher für eine genaue und im Prinzip absolute Abstandsmessung herhalten. Außerdem wirken sich Änderungen des stationären Magnetfeldes, beispielsweise aufgrund einer Verschlechterung der magnetischen Eigenschaften des Permanentmagneten, mit dem gleichen Faktor auf die hoch- und tieffrequenten Signalanteile aus, so daß durch die Quotientenbildung eine genauere Abstandsmessung möglich wird.

Durch eine Zerlegung des Signals in hoch- und tieffrequente Signalanteile und anschließende Quotientenbildung ist es möglich, die Störanfälligkeit bekannter mechanischer Sensoreinrichtungen aufgrund mechanischer Einflüsse zumindest im wesentlichen zu beseitigen.

Durch den Permanentmagneten wird ein Magnetfeld erzeugt, das so groß ist, daß es die Eigenmagnetisierung des sich relativ zum ersten Teil, z. B. zur Gegenschneide, bewegenden zweiten Teils, z. B. des Messers, überdeckt. Die verwendeten Termini "erster Teil" und "zweiter Teil" stehen für eine Vielzahl von Anwendungen, in denen der Abstand gemessen oder geprüft werden kann. Eine sehr wesentliche Anwendung ist bei Feldhäckslern gegeben, um dort z. B. den Abstand zwischen Messern und einer Gegenschneide zu überwachen, weil dieser Abstand den Leistungsverbrauch stark beeinflußt. Aber auch der Abstand zwischen den Walzen einer Nachbehandlungseinrichtung läßt sich überwachen und einstellen. Im Werkzeugmaschinenbereich kann die erfindungsgemäße Einrichtung dazu benutzt werden, den Abstand zwischen einem Scherblatt und einer Auflage zu überwachen. Andere Schneidgeräte werden verwendet, um Tabak, Gemüse, etc. zu schneiden. Weiterhin kann auch der Verschleiß von z. B. Bechem eines Becherwerkes beim Vorbeigleiten an einer Referenzstelle mittels einer Abstandsmessung erfaßt werden. Von Bedeutung ist lediglich, daß beide Teile relativ zueinander beweglich sind und der Teil, zu dem der Abstand zu messen ist, aus magnetisch leitendem Material besteht. Es können zudem mehrere zweite Teile vorhanden sein, z. B. mehrere aufeinanderfolgende Messer, Becher, etc. Der Einfachheit halber wird in der folgenden Beschreibung der erste Teil als Gegenschneide und der zweite Teil als Messer bezeichnet. Außerdem wird davon ausgegangen, daß mehrere Messer vorhanden sind, da dies der übliche Fall ist. Beispielsweise ist eine Trommel mit mehreren Messerreihen bestückt. Eine Relativbewegung zwischen Messern und Gegenschneide führt zu einer Änderung der magnetischen Flußdichte im Bereich der Induktionsspule, an deren Enden folglich eine Spannung induziert wird. Diese Spannung hängt von der Geschwindigkeit der Messer und deren Abstand zur Gegenschneide ab. Über einen Auswertekreis wird in dem Fall, daß mehrere Reihen mit Messern entlang der Gegenschneide angeordnet sind, für jede Reihe und jedes Messer ein separates Signal zur Verfügung gestellt, das vom gegenseitigen Abstand zwischen den Messern und der Gegenschneide abhängt. Die Trennung von Permanentmagnet(en) und Induktionsspule hat den Vorteil, daß die Induktionsspule und unmittelbar mit ihr verbundene elektronische Komponenten nicht im Bereich der Schneidkante der Gegenschneide untergebracht sein müssen und damit keine Verschleißteile mehr sind. Beispielsweise kann die Induktionsspule auf der der Schneidfläche gegenüberliegenden Seite der Gegenschneide auf dem Gegenschneidenbett angebracht sein. Grundsätzlich können auch mehrere Induktionsspulen gleichzeitig eingesetzt werden, z. B. gegenüber jeder Messerreihe, oder es wird eine Induktionsspule für mehrere Magneten und Messerreihen verwendet.

Damit eine plötzliche Magnetisierung der Messer, z. B. bei einem Stoß, keinen Einfluß auf das Meßverfahren zur Abstandserkennung hat, muß mit Hilfe mindestens eines Magneten in der Form eines Permanentmagneten die Eigenmagnetisierung der Messer und deren Halterung überdeckt werden. Dazu wird entweder ein Magnet in der Mitte der Seitenfläche der Gegenschneide, an der die Messer vorbeilaufen, versenkt, derart, daß der Magnet nicht allseitig vom Material der Gegenschneide umgeben wird, oder es werden mehrere Magnete in geringem Abstand zur Schneidkante auf der Gegenschneide angeordnet oder in ihr versenkt, derart, daß sie nicht allseitig vom Material der Gegenschneide umgeben sind. Dadurch, daß die Magnete freiliegende Flächen besitzen, wird die Gefahr eines magnetischen Kurzschlusses gebannt und das durch die Magneten im Außenbereich der Gegenschneide erzeugte Magnetfeld ist ausreichend groß, um Magnetfeldveränderungen der Messer näherungsweise vernachlässigen zu können. Damit die Magnete bei einer Beschädigung der Gegenschneide, z. B. durch einen Aufprall der Messer, keinen Schaden nehmen, werden sie im Normalfall derart in der Gegenschneide versenkt, daß ihre freiliegenden Flächen geringfügig gegenüber der Schneidkante nach innen versenkt sind. Bei der Verwendung mehrerer Magnete hat es sich als vorteilhaft erwiesen, pro Messer bzw. Messerreihe mindestens drei Magnete auf oder unter der Gegenschneide entlang deren Längsachse in geringem Abstand zur Schneidfläche anzuordnen. Um den Materialfluß nicht zu behindern, können die Magnete in der Gegenschneide ganz oder teilweise versenkt werden. Um einen Schutz der freiliegenden Magneten gegenüber Säuren und Nässe zu gewährleisten, können diese in geeignete säureresistente Kunststoffe eingebettet werden.

Eine Anordnung der Permanentmagnete auf der Gegenschneide liefert grundsätzlich ein besseres Signal als die Anordnung der Permanetmagnete unterhalb der Gegenschneide.

Das an der Induktionsspule abgegriffene Signal wird verstärkt und in einen hoch- und einen tieffrequenten Anteil zerlegt. Dabei kann der Verstärker mit der Induktionsspule vergossen sein, so daß lange Verbindungsdrähte vermieden werden, die Einkopplungen elektromagnetischer Strahlung von außen begünstigen würden.

Der Auswertekreis bietet eine Möglichkeit, die Grenzfrequenzen für die Hoch- und Tiefpaßfilterung zu verändern. Die für die Signalauswertung interessierenden hohen und tiefen Frequenzen hängen von der Relativgeschwindigkeit zwischen den Messern und der Gegenschneide ab. Daher sollten die Grenzfrequenzen für jede Relativgeschwindigkeit zwischen Messern und Gegenschneide gesondert eingestellt werden. Ändert sich die Relativgeschwindigkeit um einen bestimmten Faktor, sollten die Grenzfrequenzen mit dem gleichen Faktor multipliziert werden. Dadurch wird eine annähernd gleichbleibende Empfindlichkeit des Auswertekreises auf Abstandsänderungen bei unterschiedlichen Relativgeschwindigkeiten gewährleistet.

Die im Auswertekreis weiter verarbeiteten hoch- und tieffrequenten Signalanteile werden über Bandpaßfilter aus den Signalen herausgefiltert. Dadurch können zum einen sehr tieffrequente Rauschanteile unterdrückt werden und Störungen durch Einkopplungen von sehr hochfrequenten Signalen im Radiofrequenzspektrum verhindert werden. Um den herausgefilterten Frequenzbereich deutlich zu begrenzen, können Filter höherer Ordnung zum Einsatz kommen.

Im Auswertekreis werden die herausgefilterten hoch- und tieffrequenten Signale in einem Spitzenwertspeicher festgehalten, wobei die Speicherung mit einem Schalter initiiert wird, der im Takt mit dem Auftreten der Spannungspulse betrieben wird. Da die an der Induktionsspule abgegriffenen, verstärkten und gefilterten Spannungspulse Kondensatoren aufladen, ist es für eine schnelle Signalauswertung erforderlich, die Kondensatoren so schnell zu entladen, daß ein ankommender Puls nicht vom vorhergehenden gespeicherten Puls überdeckt wird. Die Steuerung des Lade- und Entladevorgangs mit Schaltern erweist sich in diesem Fall als vorteilhaft gegenüber der kontinuierlichen Entladung der Kondensatoren über Widerstände.

Im Auswertekreis wird mittels einer Dividierschaltung der Quotient aus den analogen oder in digitale Signale konvertierten hoch- und tieffrequenten Signalanteilen gebildet. Dies hat den Vorteil, daß Änderungen z. B. der Magnetisierung des oder der Permanentmagneten in der Signalauswertung unterdrückt werden, da sich hoch- und tieffrequenter Signalanteil mit dem gleichen Faktor ändern.

Die Ausgangsspannung des Analogdividierers wird dann mit einer beispielsweise über ein Potentiometer eingestellten Vergleichsspannung verglichen. Diese kann so gewählt sein, daß sie einem nicht zu unterschreitenden Abstand zwischen Messern und Gegenschneide entspricht.

Wenn die Ausgangsspannung des Analogdividierers die Vergleichsspannung überschreitet, wird eine Warneinrichtung in Gang gesetzt, die beispielsweise aus einer Leuchtdiode oder einem Lautsprecher besteht.

Die den Abstand zwischen der Gegenschneide und den relativ zu dieser bewegbaren Schneidelementen einer Schneideinrichtung überwachende Einrichtung findet vorzugsweise in einem Feldhäcksler Anwendung. In diesem Fall wird der Abstand der sich auf einer Schneidtrommel befindenden Messer zur Gegenschneide mit der Überwachungseinrichtung überprüft.

Da eine Schneidtrommel eines Feldhäckslers in der Regel über mehrere Messerreihen verfügt, wird gegenüber einer jeden Messerreihe, bestehend aus mehreren Messern, eine Sensoreinrichtung, bestehend aus Permanentmagnet(en) und Induktionsspule angeordnet. Dadurch, daß jedoch die Induktionsspule getrennt von den oder dem Permanentmagneten entlang der Gegenschneide angeordnet werden kann, ist es bei ausreichend starken Magneten auch denkbar, lediglich eine Sensoreinrichtung zu verwenden, sofern alle Messer zeitlich versetzt die Gegenschneide passieren. Das brächte eine deutliche Material- und Kostenersparnis mit sich.

In der Zeichnung ist ein nachfolgend näher beschriebenes Ausführungsbeispiel der Erfindung dargestellt. Es zeigt:
- Fig. 1: eine Anordnung dreier Permanentmagnete und einer Induktionsspule an einer Gegenschneide in Seitenansicht und Draufsicht,
- Fig. 2: ein Blockdiagramm zur induktiven Abstandsmessung,
- Fig. 3: eine Verstärker- und Filterschaltung,
- Fig. 4: eine Schaltung zur Speicherung der herausgefilterten hoch- und tieffrequenten Signalanteile,
- Fig. 5: eine grafische Darstellung der Impulsformen vor und nach der Erzeugung des Taktsignals aus dem an der Induktionsspule abgegriffenen Spannungspuls,
- Fig. 6: eine Analogdividiererschaltung,
- Fig. 7: eine Schaltung zur Abstandsüberwachung und
- Fig. 8: einen Feldhäcksler mit einer Schneidtrommel und einer Gegenschneide in Seitenansicht.

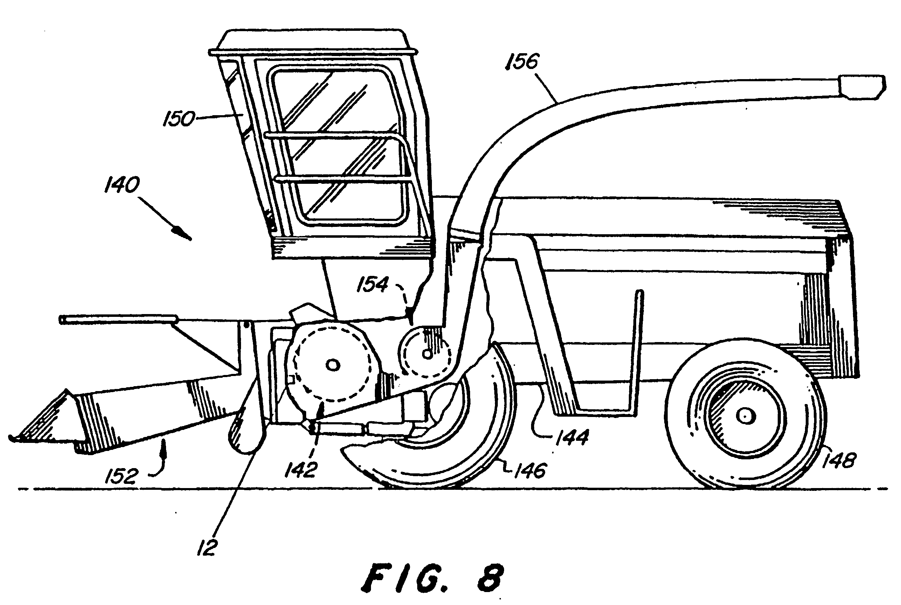

Fig. 8 zeigt einen selbstfahrenden Feldhäcksler 140 mit einer Schneidtrommel 142 und einer Gegenschneide 12. Der Feldhäcksler 140 baut sich auf einem Rahmen 144 auf, der von vorderen und rückwärtigen Rädern 146 und 148 getragen wird. Die Bedienung des Feldhäckslers 140 erfolgt von einer Fahrerkabine 150 aus, von der aus eine Erntegutaufnahmevorrichtung 152 einsehbar ist. Mittels der Erntegutaufnahmevorrichtung 152 vom Boden aufgenommenes Gut, z. B. Mais, Gras oder dergleichen wird der Schneidtrommel 142 zugeführt. Längs der Schneidtrommel 142 befindet sich eine Gegenschneide 12. Das Fördergut wird in kleine Stücke gehäckselt und der Fördervorrichtung 154 aufgegeben. Das Gut verläßt den Feldhäcksler 140 zu einem nebenher fahrenden Anhänger über einen drehbaren Austragsschacht 156.

Weitere Einzelheiten des Feldhäckslers 140 bedürfen keiner Beschreibung, weil dieser an sich bekannt ist.

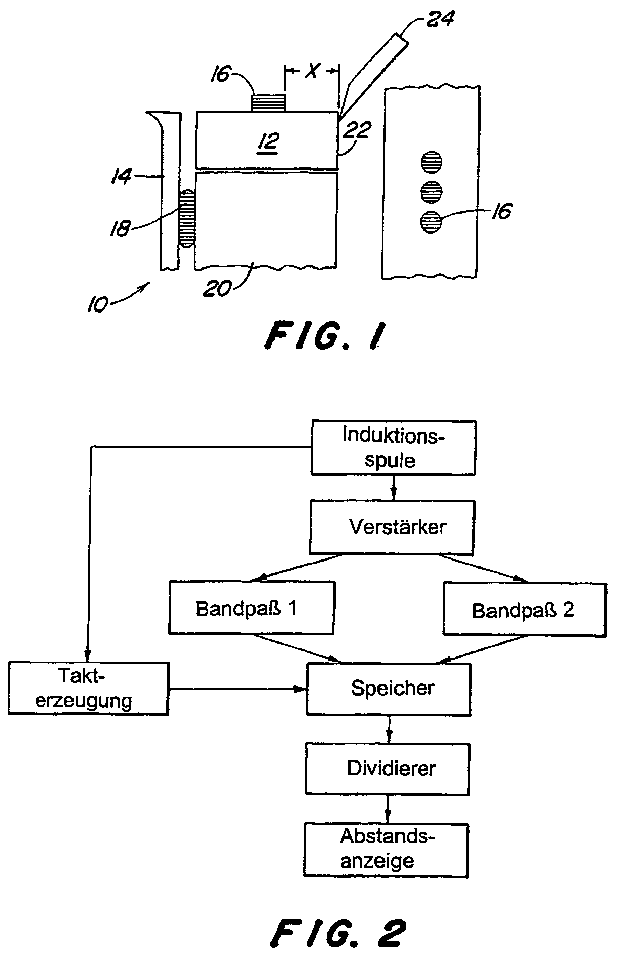

Figur 1 zeigt in ihrer linken Hälfte einen Querschnitt durch eine Schneidevorrichtung 10, bestehend aus einem ersten Teil in der Form einer Gegenschneide 12 und einem oder mehreren zweiten Teilen in der Form von Messern 24. Auf der Gegenschneide 12 befinden sich im vorliegenden Beispiel drei Permanentmagnete 16 und neben dieser eine Induktionsspule 18. Die Gegenschneide 12 befindet sich auf einem Gegenschneidenbett 20. Die zylinderförmigen Permanentmagnete 16 sind, wie in dem rechten Teilbild verdeutlicht, auf der Gegenschneide 12 mit ihrer Mantelfläche in einem Abstand x von einer Schneidfläche 22 in gleichem Abstand zu dieser angeordnet, können jedoch auch ganz oder teilweise versenkt sein. Die Induktionsspule 18 befindet sich auf der der Schneidfläche 22 abgewandten Seite der Gegenschneide 12 zwischen der Gegenschneide 12 und einem Abstreifblech 14 neben dem Gegenschneidenbett 20.

Im Betrieb werden die Messer 24 an der Schneidfläche 22 vorbeigeführt und verändern das durch die Permanentmagnete 16 erzeugte Magnetfeld. Diese Änderung löst an den Enden der Induktionsspule 18 einen Spannungspuls aus. Dieser läßt sich in einen hoch- und einen tieffrequenten Anteil zerlegen, deren Verhältnis betragsmäßig umso größer ist, je kleiner der Abstand x gewählt ist. Das Abstreifblech 14 schützt die Induktionsspule 18 vor abgeschnittenem Schneidgut. In einer nicht gezeigten alternativen Ausführungsform ist ein Permanentmagnet 16 in der Schneidfläche 22 der Gegenschneide 12 versenkt, wobei die den Messern 24 gegenüberliegende Fläche des Permanentmagneten 16 freiliegt.

Das Prinzip der induktiven Abstandsmessung ist in Figur 2 schematisch dargestellt. Der an den Enden der Induktionsspule 18 abgegriffene Spannungspuls wird verstärkt und mittels zweier Bandpaßfilter 26 in einen hoch- und einen tieffrequenten Signalanteil zerlegt. Die beiden Signalanteile werden gespeichert, durcheinander dividiert und der Quotient wird mit einer festen Spannung verglichen. Die Abweichung des Quotienten von der festen Spannung drückt unmittelbar den Abstand von Messer 24 und Gegenschneide 12 aus und kann über eine Abstandsanzeige sichtbar gemacht werden. Das Laden und Löschen des Speichers erfolgt im Takt mit dem Auftreten der Spannungspulse.

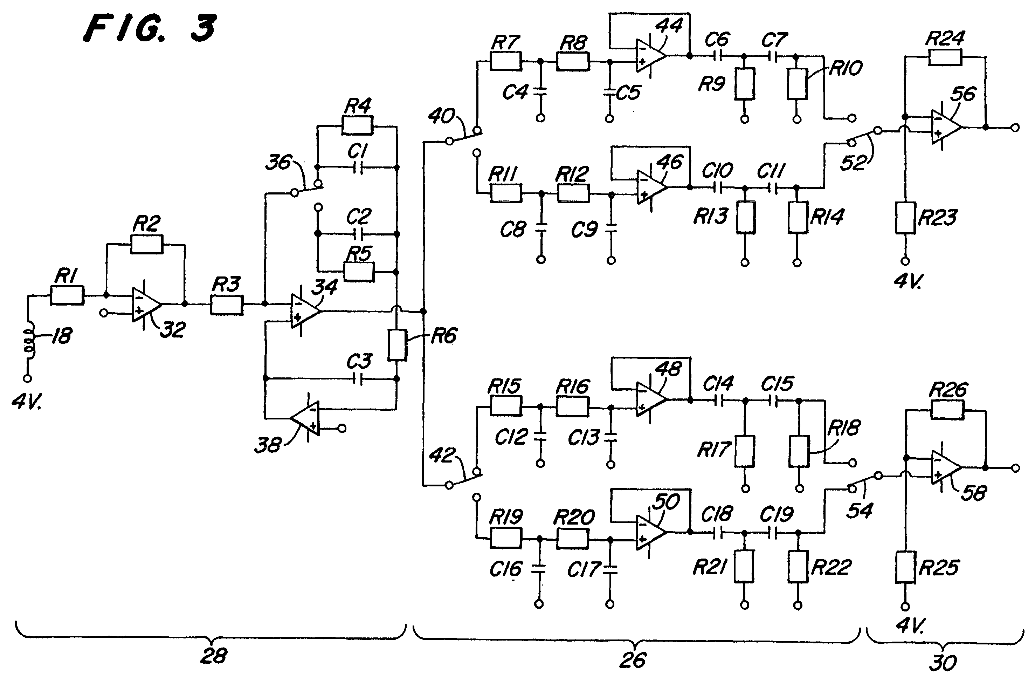

Die gesamte Verstärker- und Filterschaltung ist in Figur 3 wiedergegeben. Sie enthält eine Vorverstärkereinheit 28, vier Bandpaßfilter 26 und einen Nachverstärker 30. Die Vorverstärkereinheit 28 ist an der Induktionsspule 18 angeschlossen und umfaßt drei Operationsverstärker 32, 34 und 38, einen Schalter 36, Widerstände R1 bis R6 und Kondensatoren C1 bis C3. Die Bandpaßfilter 26 sind mit Schaltern 40, 42, 52 und 54 versehen und umfassen Operationsverstärker 44, 46, 48 und 50, Widerstände R7 bis R22 und Kondensatoren C4 bis C19. Der Nachverstärker enthält zwei Operationsverstärker 56 und 58 und Widerstände R23 bis R26.

Mit der Induktionsspule 18 ist ein invertierender Verstärker vergossen, bestehend aus dem Operationsverstärker 32 und den Widerständen R1 und R2. Ein Ende der Induktionsspule 18 befindet sich auf einem konstanten Potential von 4 V und das andere Ende ist über den Widerstand R1 an den invertierenden Eingang des Operationsverstärkers 32 geführt. Dessen Ausgang ist über den Widerstand R2 an seinen invertierenden Eingang rückgekoppelt. Der Ausgang des Operationsverstärkers 32 ist über den Widerstand R3 an den invertierenden Eingang des Operationsverstärkers 34 geführt. Über den Schalter 36 wird sein invertierender Eingang an eine von zwei Parallelschaltungen von Widerständen R4 bzw. R5 und Kondensatoren C1 bzw. C2 angeschlossen, die über den Widerstand R6 mit dem invertierenden Eingang des als Integrierer betriebenen Operationsverstärkers 38 verbunden sind. Dessen Ausgang ist an den nichtinvertierenden Eingang des Operationsverstärkers 34 geführt. Der Kondensator C3 verbindet den invertierenden Eingang und den Ausgang des Operationsverstärkers 38. Die Ausgangsspannung des Operationsverstärkers 34 wird mittels der Schalter 40 und 42 jeweils einer von zwei Filterschaltungen zugeführt. Diese sind gleichartig aufgebaut und enthalten zwei hintereinander geschaltete Tiefpässe, bestehend aus den Widerständen R7 (R11, R15, R19) bzw. R8 (R12,R16,R20), sowie den Kondensatoren C4 (C8, C12, C16) bzw. C5 (C9,C13,C17). Die Angaben in Klammern beziehen sich jeweils auf die anderen drei Filterschaltungen. Über den als Impedanzwandler betriebenen Operationsverstärker 44 (46, 48, 50) wird die Ausgangsspannung der Tiefpässe zwei hintereinander geschalteten Hochpässen zugeführt, bestehend aus den Kondensatoren C6 (C10,C14,C18) bzw. C7 (C11,C15,C19), sowie den Widerständen R9 (R13,R17,R21) bzw. R10 (R14,R18,R22). Jeder Tief- bzw. Hochpaß setzt sich aus einem Paar in Reihe geschalteter Widerstände und Kondensatoren zusammen zwischen denen das gefilterte Signal abgegriffen wird. Im Falle der Tiefpässe sind die Kondensatoren C4 (C8, C12, C16) bzw. C5 (C9,C13,C17) und im Falle der Hochpässe die Widerstände R9 (R13,R17,R21) bzw. R10 (R14,R18,R22) mit einem Ende an die 4 V-Spannungsversorgung angeschlossen. Die Ausgangsspannung jeder der vier Filterschaltungen kann vermöge des Schalters 52 bzw. 54 dem nichtinvertierenden Eingang eines Operationsverstärkers 56 bzw. 58 zugeführt werden. Der nichtinvertierende Eingang ist jeweils über den Widerstand R23 bzw. R25 mit der 4V-Spannungsversorgung verbunden und zum anderen über den Widerstand R24 bzw. R26 an den Ausgang des Operationsverstärkers 56 bzw. 58 gekoppelt.

Aus der vorherigen Schaltungsbeschreibung ergibt sich folgende Funktion:

Die Verstärkung des an der Induktionsspule 18 abgegriffenen Spannungspulses erfolgt mit dem als invertierenden Verstärker betriebenen Operationsverstärker 32. Der Verstärkungsfaktor ist durch das Verhältnis -R2/R1 gegeben. In der zweiten Verstärkerstufe, die den invertierend betriebenen Operationsverstärker 34 enthält, kommt es durch die zu den Widerständen R4 bzw. R5 parallel geschalteten Kondensatoren C1 bzw. C2 zu einer Tiefpaßfilterung, so daß hochfrequente elektromagnetische Einstreuungen in die Kabelzuführung unterdrückt werden. Der Schalter 36 dient dazu, zwischen zwei durch die Widerstände R4, R5 und Kondensatoren C1, C2 bestimmten Grenzfrequenzen wählen zu können, beispielsweise bei unterschiedlichen Relativgeschwindigkeiten zwischen Messer 24 und Gegenschneide 12. Durch den als Integrierer betriebenen Operationsverstärker 38 erfolgt eine Kompensation der Offsetspannung, indem der Gleichspannungsanteil des an der Induktionsspule 18 abgegriffenen und verstärkten Signals am nichtinvertierenden Eingang des Operationsverstärkers 34 ausgeregelt wird. Die Ausgangsspannung des Operationsverstärkers 34 wird den Bandpaßfiltern 26 zugeführt und damit eine Zerlegung in einen hoch- und einen tieffrequenten Signalanteil vorgenommen. Die Schalter 40 und 42 dienen dazu, Bandpaßfilter 26 mit unterschiedlichen Grenzfrequenzen zu aktivieren, für den Fall, daß die Relativgeschwindigkeit zwischen Messer 24 und Gegenschneide 12 zwei Werte einnehmen kann. Die Bandpaßfilter 26 enthalten jeweils einen Tief- und Hochpaß 2. Ordnung, die durch einen als Impedanzwandler geschalteten Operationsverstärker 44 (46, 48, 50) getrennt sind. Der Impedanzwandler wirkt als Puffer zwischen den aufeinanderfolgenden Tief- und Hochpässen. Damit die Bandpaßfilter 26 immer im optimalen Frequenzbereich arbeiten, ist eine Einstellung der Grenzfrequenzen in Abhängigkeit von der Relativgeschwindigkeit zwischen Messer 24 und Gegenschneide 12 erforderlich, was im gezeigten Beispiel der Figur 3 für zwei Relativgeschwindigkeiten möglich ist. In einer weiteren Verstärkerstufe werden die Ausgangsspannungen der Bandpaßfilter 26 vermöge der Schalter 52 bzw. 54 als nichtinvertierende Verstärker arbeitenden Operationsverstärkern 56 und 58 zugeführt. Deren Ausgangsspannungen stellen die tief- und hochfrequenten Signalanteile dar, die gespeichert werden.

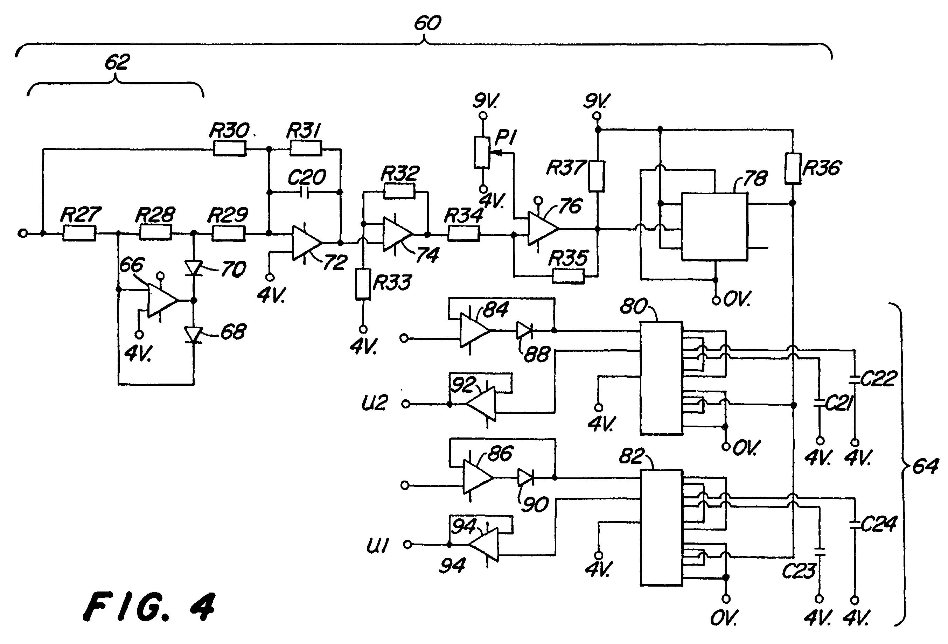

Die Schaltung zur Speicherung der hoch- und tieffrequenten Signalanteile ist in Figur 4 wiedergegeben. Sie umfaßt eine Einrichtung zur Takterzeugung 60 und mit dieser verbundene Bausteine zur eigentlichen Signalspeicherung 64. Am Eingang der Einrichtung zur Takterzeugung 60 liegt das an der Induktionsspule 18 abgegriffene Spannungssignal an. Dieses wird einer als Vollweggleichrichter funktionierenden Einrichtung 62, die zwei Operationsverstärker 66 und 72, zwei Dioden 68 und 70 sowie zwei identische Widerstände R27 und R28 und Widerstände R29 bis R31 sowie einen Kondensator C20 umfaßt, zugeführt. Ferner enthält die Einrichtung zur Takterzeugung 60 Operationsverstärker 74 und 76, Widerstände R32 bis R37, ein Potentiometer P1 und ein Flip-Flop 78. Die Einrichtung zur Speicherung der Signale umfaßt zwei Analogmultiplexer 80 und 82 nach Art eines CD4053 mit Ausgängen Y sowie mit X, Z, X0, X1, Y0, Y1, Z0, Z1, INH, A, B, C und VEE bezeichneten Eingängen. Außerdem enthält sie vier Operationsverstärker 84, 86, 92 und 94, zwei Dioden 88 und 90 und vier Kondensatoren C21 bis C24.

Der Einrichtung zur Vollweggleichrichtung 62 enthält den Operationsverstärker 66, dessen Ausgang mit der Anode der Diode 68 und der Katode der Diode 70 verbunden ist. Die Diode 68 ist mit ihrem anderen Ende an den invertierenden Eingang des Operationsverstärkers 66 geführt. Die Anode der Diode 70 ist einerseits über den Widerstand R28 mit dem invertierenden Eingang des Operationsverstärkers 66 verbunden und andererseits über den Widerstand R29 mit dem invertierenden Eingang des Operationsverstärkers 72. Zwischen Ausgang und invertierendem Eingang des Operationsverstärkers 72 befindet sich eine Parallelschaltung aus dem Kondensator C20 und dem Widerstand R31. Dieser wird über den Widerstand R30 das an der Induktionsspule 18 abgegriffene Signal zugeführt. Dieses liegt über den Widerstand R27 auch am invertierenden Eingang des Operationsverstärkers 66 an. Die Widerstände R30 und R31 sind doppelt so groß wie R29. Der Ausgang des Operationsverstärker 72 ist mit dem nichtinvertierenden Eingang des Operationsverstärkers 74 verbunden. Der Ausgang dieses Operationsverstärkers 74 ist über den Widerstand R32 an den invertierenden Eingang rückgekoppelt und über den Widerstand R33 an die 4 V-Spannungsversorgung gelegt. Die Ausgangsspannung des Operationsverstärkers 74 liegt über den Widerstand R34 am nichtinvertierenden Eingang eines als Komparator geschalteten Operationsverstärkers 76 an. Die an einem Potentiometer P1 abgegriffene Spannung ist an den invertierenden Eingang des Operationsverstärkers 76 gelegt. Das Potentiometer P1 befindet sich in einem Stromkreis, dessen Enden sich auf konstantem Potential von 4V bzw. 9 V befinden. Der Ausgang des Operationsverstärkers 76 ist zum einen über den Widerstand R35 an seinen nichtinvertierenden Eingang rückgekoppelt und steuert zum anderen den 'Clock'-Eingang CLK des Flip-Flops 78. Die J- und K-Eingänge des Flip-Flops 78 sind miteinander verbunden und hängen einerseits an einer 9 V-Spannungsversorgung und sind andererseits via des Widerstandes R36 mit dem Q-Ausgang des Flip-Flops 78 verbunden. Mit der 9 V-Spannungsversorgung ist auch der Ausgang des Operationsverstärkers 76 über den Widerstand R37 verschaltet. Die 'Set' ( S )- und 'Reset' ( R )-Eingänge des Flip-Flops 78 befinden sich auf 0 V.

Die Eingänge INH und VEE der Analogmultiplexer 80 und 82 sind geerdet, während die Eingänge X0, Y0 und Z0 sowie X1, Y1 und Z1 jeweils miteinander verbunden sind und über die Kondensatoren C21 und C22 bzw. C23 und C24 an der 4 V-Spannungsversorgung liegen. Auf dem gleichen Potential befindet sich die Z-Eingänge. Die Eingänge A, B und C beider Analogmultiplexer 80 und 82 sind jeweils miteinander und mit dem Q-Ausgang des Flip-Flops 78 verbunden und die X-Eingänge sind an die invertierenden Eingänge der Operationsverstärker 84 bzw. 86 geführt und mit deren Ausgängen über Dioden 88 bzw. 90 verbunden. Die Anoden der Dioden 88 bzw. 90 befinden sich an den Ausgängen der Operationsverstärker 84 bzw. 86. Die Y-Ausgänge der Analogmultiplexer 80 bzw. 82 hängen am nichtinvertierenden Eingang zweier Operationsverstärker 92 bzw. 94, deren Ausgänge an die invertierenden Eingänge rückgekoppelt sind.

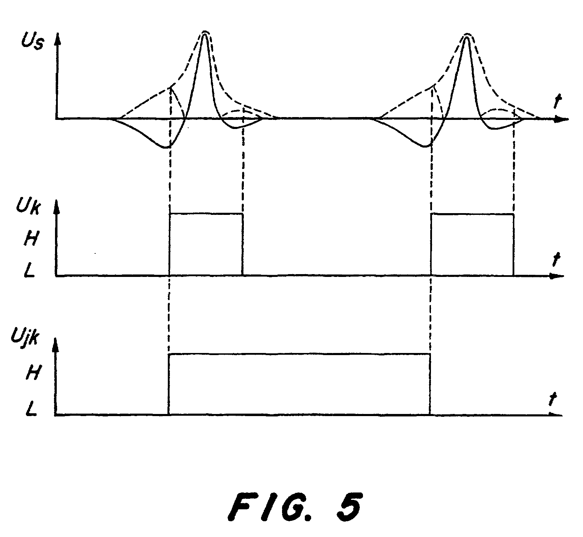

Die Steuerung der Analogmultiplexer 80 und 82 erfolgt im Takt mit dem Sensorsignal. Vor dem Hauptpuls des Sensorsignals erscheint eine negative Flanke, wie in Figur 5 dargestellt. Da die tief- und hochfrequenten Signalanteile durch den Hauptpuls gebildet werden, kann mit der negativen Flanke eine Steuerung der Multiplexer 80 und 82 erfolgen. Dazu wird mit der Einrichtung zur Vollweggleichrichtung 62, die den Operationsverstärker 66 enthält, der Absolutwert des Spannungspulses erzeugt. Bei positiver Eingangsspannung arbeitet der Operationsverstärker 66 als invertierender Verstärker. Folglich ist seine Ausgangsspannung negativ, so daß die Diode 70 leitet und die Ausgangsspannung des Operationsverstärkers 66 über den Widerstand R28 rückkoppelt. Damit ergibt sich ein Verstärkungsfaktor von -1. Der Operationsverstärker 72 ist ebenfalls als invertierender Verstärker geschaltet, so daß sich mit dem Widerstandsverhältnis R31/R29 = R30/R29 = 2 eine Ausgangsspannung am Operationsverstärker 72 einstellt, die gleich der an der Induktionsspule 18 abgegriffenen Spannung ist. In dem Fall, daß die Eingangsspannung negativ ist, wird die Diode 68 leitend. Der Operationsverstärker 66 wird direkt rückgekoppelt und hat eine Verstärkung von 0. Am Ausgang des invertierend betriebenen Operationsverstärkers 72 ergibt sich demnach der Betrag des an der Induktionsspule 18 abgegriffenen Spannungspulses. Der aus Kondensator C20 und Widerstand R31 gebildete Tiefpaß überbrückt den Spannungseinbruch zwischen invertierter negativer Flanke und dem Hauptteil des Spannungspulses, so daß eine unbeabsichtigte Erzeugung von zwei Taktpulsen durch den nachgeschalteten Komparator vermieden wird. Der Komparator enthält einen invertierend geschalteten Operationsverstärker 76, dessen invertierender Eingang mit einer an einem Potentiometer P 1 abgegriffenen Referenzspannung versorgt wird. Diese dient dazu, am Ausgang des Komparators einen positiven Spannungspuls zur Verfügung zu stellen, wenn die vor der Gleichrichtung negative Flanke des an der Induktionsspule 18 abgegriffenen Spannungspulses weitgehend abgeklungen ist. Dieses Verhalten ist in Figur 5 dargestellt. Us ist der Spannungspuls vor der Gleichrichtung (durchgezogene Linie) bzw. nach der Gleichrichtung (gestrichelte Linie). Die gepunktete Linie zeigt das Signal, das ohne Tiefpaßfilterung erhalten würde. Uk ist die Ausgangsspannung des Komparators, die an den 'Clock'-Eingang CLK des Flip-Flops 78 gelegt wird. Mit der steigenden Flanke des folgenden Spannungspulses am Ausgang des Komparators wird der Flip-Flop 78 zurückgesetzt. Der Ausgang des Flip-Flops 60 ist das Taktsignal für die Signalspeicherung und in Figur 5 mit Ujk bezeichnet. H und L kennzeichnen den 'HIGH'- bzw. 'LOW'-Pegel.

Die Signalspeicherung wird mit zwei Analogmultiplexern 80 und 82 für die hoch- und tieffrequenten Signalanteile realisiert. Sie beinhalten je drei 2-Kanal-Umschalter. Die Schalterstellungen werden über die Steuereingänge A, B, C der Bausteine gewählt. Da als Steuersignal nur der Ausgang des Flip-Flops 78 vorhanden ist, sind die Steuereingänge A, B und C miteinander verbunden. Mit jedem 'HIGH'-Pegel an den Steuereingängen A, B, C wird einer der Kondensatoren C21 oder C22 und C23 oder C24 geladen und der jeweils andere entladen. Durch die Verwendung jeweils zweier Kondensatoren C21 und C22 bzw. C23 und C24 ist gewährleistet, daß der Aufladevorgang nicht durch den Entladevorgang überdeckt wird und damit aufeinanderfolgende Spannungspulse deutlich voneinander getrennt werden können. Indem die Eingänge INH und VEE auf Masse (= 0 V) liegen, sind die Analogmultiplexer 80 und 82 ständig aktiv. Die hoch- und tieffrequenten Signalanteile werden vor den Analogmultiplexern 80 und 82 mittels der als Impedanzwandler geschalteten Operationsverstärker 84 und 86 gepuffert. Die Dioden 88 und 90 verhindern ein Entladen der Kondensatoren C21 bis C24 über die Ausgänge der Operationsverstärker 84 bzw. 86. Die Signalausgänge Y der Analogmultiplexer 80 und 82 sind mit den als Impedanzwandler geschalteten Operationsverstärkern 92 und 94 von nachgeschalteten elektronischen Bauteilen entkoppelt. An den Ausgängen der Operationsverstärker 92 und 94 liegen die den hochbzw- tieffrequenten Spannungspulsen entsprechenden Spannungen u1 und u2, die einer Analogdividiererschaltung zugeführt werden.

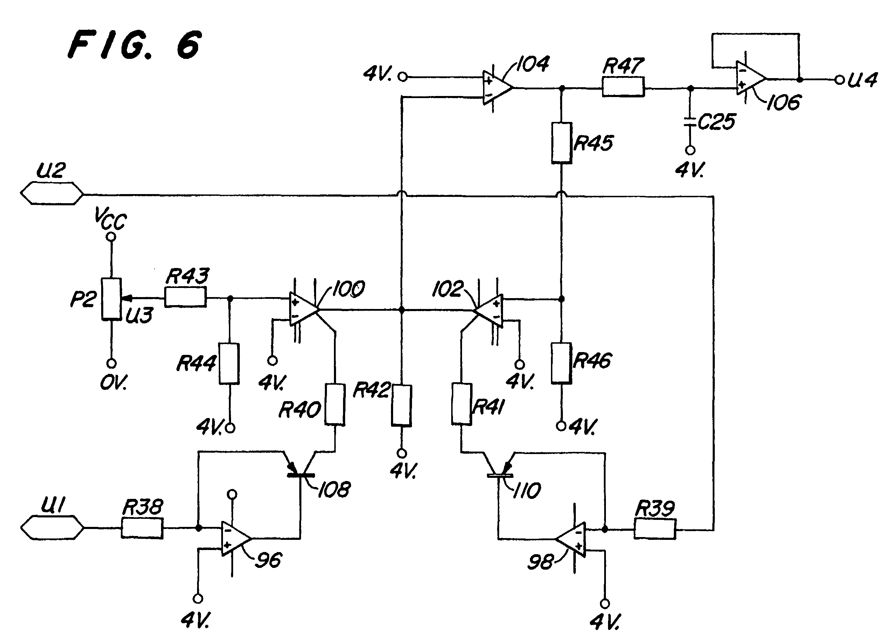

Die Analogdividiererschaltung ist in Figur 6 gezeigt. Sie enthält vier Operationsverstärker 96, 98, 104 und 106, zwei 'Operational Transconductance Amplifier' (OTA) 100 und 102 von der Art eines CA3080 sowie zwei pnp-Transisoren 108 und 110, Widerstände R38 bis R47, einen Kondensator C25 und ein Potentiometer P2.

Die nichtinvertierenden Eingänge der Operationsverstärker 96 und 98 sind mit der 4 V-Spannungsversorgung verbunden. Die invertierenden Eingänge werden von den hoch- und tieffrequenten Signalanteilen der Analogmultiplexer 80 und 82 versorgt, die über die Widerstände R38 und R39 abfallen. Die Ausgangsspannung der beiden Operationsverstärker 96 bzw. 98 liegt an der Basis der pnp-Transistoren 108 bzw. 110 an, deren Emitter mit dem invertierenden Eingang des Operationsverstärkers 96 bzw. 98 verbunden ist. Der Kollektor des pnp-Transistors 108 bzw. 110 ist über den Widerstand R40 bzw. R41 mit dem Eingang 5 des OTA 100 bzw. 102 verbunden. Die Ausgänge der OTA 100 und 102 sind in einem Knotenpunkt zusammengeführt, der über einen Widerstand R42 einerseits an die 4 V-Spannungsversorgung geführt ist und andererseits am invertierenden Eingang des Operationsverstärkers 104 liegt. Dessen nichtinvertierender Eingang befindet sich auf einem konstanten Potential von 4 V. Die nichtinvertierenden Eingänge der OTA 100 bzw. 102 sind mit Spannungsteilern, bestehend aus den Widerständen R43 und R44 bzw. R45 und R46 verbunden. Die Widerstände R44 und R46 hängen an der 4 V-Spannungsversorgung. Über den Widerstand R43 wird eine Spannung zwischen 0 V und einer Spannung VCC an einem Potentiometer P2 abgegriffen. Der Widerstand R45 ist unmittelbar mit dem Ausgang des Operationsverstärkers 104 sowie einem Tiefpaß, bestehend aus einem Widerstand R47 und einem Kondensator C25 verbunden. Der Tiefpaß hängt mit seinem Ausgang am nichtinvertierenden Eingang des Operationsverstärkers 106 und der Kondensator C25 befindet sich mit einem Ende an der 4 V-Spannungsversorgung. Der Ausgang des Operationsverstärkers 106 ist an dessen invertierenden Eingang rückgekoppelt.

Die den hoch- und tieffrequenten Spannungspulsen der Signale entsprechenden Spannungen u1 und u2 werden den invertierenden Eingängen der Operationsverstärker 96 und 98 über die Widerstände R38 und R39 zugeführt. Die Spannungspulse werden vermöge der pnp-Transistoren zu Strompulsen konvertiert, mit denen der Ausgangsstrom der OTA 100 und 102 gesteuert wird. Berücksichtigt man, daß an dem Knotenpunkt, an dem die Ausgänge der OTA 100 und 102 zusammengeführt sind, die Summe aller Ströme Null ist, erhält man (bei gleichen Gehäusetemperaturen der OTA 100 und 102) am Ausgang des Operationsverstärkers 104 eine Spannung, die zu der am Potentiometer P2 abgegriffenen Spannung u3 und dem Verhältnis der Spannungen u1 und u2 proportional ist. Mit der Spannung u3 läßt sich die Verstärkung des Analogdividierers einstellen. Die Spannung u3 muß zwischen 0 V und ±1 V liegen, um Verzerrungen zu vermeiden. In der Zeit zwischen dem Laden und Entladen der Speicherkondensatoren der Analogmultiplexer 80 und 82 sind die Spannungen u1 = u2 = 0V. Bei der Division kommt es in diesem Zeitabschnitt zu Spannungsspitzen, die durch den Tiefpaß, bestehend aus Widerstand R47 und Kondensator C25, unterdrückt werden. Hinter dem Tiefpaß befindet sich ein Impedanzwandler, bestehend aus dem Operationsverstärker 106, dessen Ausgangsspannung einer Überwachungseinrichtung zugeführt wird.

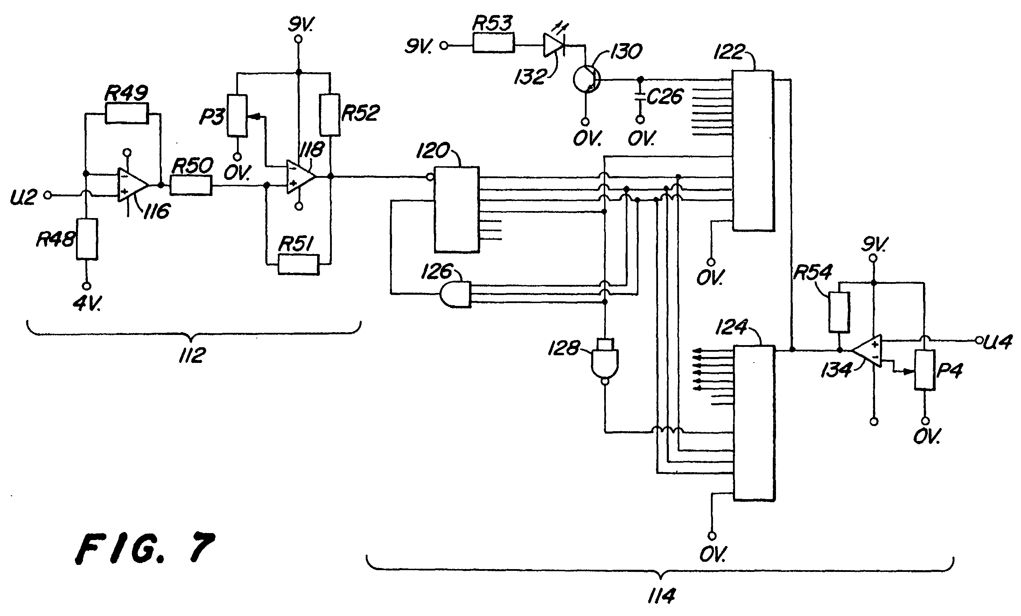

Figur 7 zeigt die Schaltung zur Abstandsüberwachung. Sie enthält eine Einrichtung zur Takt-Erzeugung 112 sowie eine Einrichtung 114 zur Ansteuerung von Leuchtdioden 132. Die Einrichtung zur Takt-Erzeugung enthält einen Operationsverstärker 116 und einen als Komparator geschalteten Operationsverstärker 118, sowie Widerstände R48 bis R52 und ein Potentiometer P3. Die Einrichtung zur Ansteuerung der Leuchtdioden 132 enthält einen Zähler 120 nach Art eines CD4024, sowie zwei Analogmultiplexer 122 und 124 nach Art eines CD4051. Sie enthält ferner ein 3-fach UND-Gatter 126 und einen Inverter 128. Der Zähler 120 besitzt einen 'Clock'-Eingang CLK und einen 'Reset'-Eingang RST sowie mit Q1 bis Q7 bezeichnete Ausgänge. Die Analogmultiplexer 122 und 124 besitzen jeweils mit X0 bis X7 bezeichnete Ausgänge, sowie Eingänge A, B, C, VEE, INH und X. Die Einrichtung umfaßt ferner vierzehn Leuchtdioden 132, sowie 14 Kondensatoren C26, einen Widerstand R54, 14 Widerstände R53, einen Operationsverstärker 134 und ein Potentiometer P4.

Der dem niederfrequenten Signalanteil entsprechende Spannungspuls u2 liegt am nichtinvertierenden Eingang des Operationsverstärkers 116 an. Sein invertierender Eingang ist zum einen über den Widerstand R48 an die 4 V-Spannungsversorgung gehängt und ist zum anderen über den Widerstand R49 mit dem Ausgang des Operationsverstärkers 116 verbunden. Dieser hängt über den Widerstand R50 am nichtinvertierenden Eingang des Operationsverstärkers 118. Dieser Eingang ist gleichzeitig über den Widerstand R51 mit dem Ausgang des Operationsverstärkers 118 verbunden. Dieser ist über den Widerstand R52 mit der 9 V-Versorgungsspannung verbunden. An dieser hängt auch das Potentiometer P3, das mit seinem anderen Ende geerdet ist. Am Potentiometer P3 wird eine Spannung abgegriffen, die dem invertierenden Eingang des Operationsverstärkers 118 zugeführt wird.

Der Ausgang des Operationsverstärkers 118 ist mit dem 'Clock'-Eingang CLK des Zählers 120 verbunden. Die Ausgänge Q1, Q2 bzw. Q3 des Zählers 120 sind den Eingängen A, B bzw. C beider Analogmultiplexer 122 und 124 zugeführt. Die Ausgänge Q2 und Q3 des Zählers 120 sowie der Eingang INH des Analogmultiplexers 122 sind mit den Eingängen des 3-fach AND-Gatters 126 verbunden. Dessen Ausgang hängt am Eingang RST des Schalters 120. Der Ausgang Q4 des Zählers 120 ist an den Inverter 128 geführt. Dessen Ausgang ist mit dem Eingang INH des zweiten Analogmultiplexers 124 verbunden. Die Eingänge VEE beider Analogmultiplexer 122 und 124 sind auf Masse gelegt. Die Ausgänge X0 bis X7 des Analogmultiplexers 122 und die Ausgänge X0 bis X5 des Analogmultiplexers 124 sind mit der Basis jeweils eines Darlington-Transistors 130 verbunden. Diese ist jeweils mittels des Kondensators C26 geerdet. Der Emitter der Darlington-Transistoren 130 befindet sich auf Masse und der Kollektor ist jeweils über die Leuchtdiode 132 und den Widerstand R53 mit einer 9 V-Spannungsversorgung verbunden. Die Ausgangsspannung u4 des in Figur 6 dargestellten Analogdividierers ist dem nichtinvertierenden Eingang des als Komparator ausgebildeten Operationsverstärkers 134 zugeführt, dessen invertierender Eingang an einem Potentiometer P4 hängt. Dieses ist zum einen an Masse gehängt und zum anderen über einen Widerstand R54 mit dem Ausgang des Operationsverstärkers 114 und den Eingängen X der Analogmultiplexer 122 und 124 verbunden.

Das in der Figur 7 gezeigte Ausführungsbeispiel einer Schaltung zur Abstandsüberwachung ist für eine Überwachung des Abstands von 14 aufeinanderfolgenden Messern 24 ausgelegt. Jedem dieser Messer 24 ist eine Leuchtdiode 132 zugewiesen. Die Erzeugung eines Taktsignals für den Zähler 120 erfolgt mittels des dem tieffrequenten Signalanteil entsprechenden Spannungspulses, der mit dem Operationsverstärker 116 verstärkt wird. Der verstärkte Spannungspuls wird an einem als Komparator geschalteten Operationsverstärker 118 mit einer am Potentiometer P3 abgegriffenen Spannung verglichen. Die Auswahl der Leuchtdioden 132 erfolgt mittels des Zählers 120, dessen Initiierung mit der Ausgangsspannung des Operationsverstärkers 118 über den CLK-Eingang erfolgt. Der Zähler 120 ist als 7-Bit-Zähler ausgebildet, wobei ein Zurücksetzen bei Zählerstand 15 erfolgt. Dazu muß ein HIGH-Signal am RST-Eingang anliegen. Zur Aktivierung der Analogmultiplexer 122 und 124 müssen deren Eingänge INH auf LOW liegen. Bis zum Zählerstand 8 ist Q4 LOW und damit der Analogmultiplexer 122 aktiv. Beim Zählerstand 9 ist Q4 HIGH, so daß der Analogmultiplexer 122 inaktiv und vermöge des Inverters 128 der Analogmultiplexer 124 aktiv wird. Mit dem gleichzeitigen Umspringen der Q2, Q3 und Q4-Ausgänge vom LOW- zum HIGH-Pegel wird der Zähler 120 via dem 3-fach AND-Gatter 126 und dem RST-Eingang neu gestartet. Die Ausgänge X0 bis X7 bzw. X0 bis X5 der Analogmultiplexer 122 bzw. 124 steuern jeweils die Basis eines Darlington-Transistors 130 an. Die Darlington-Transistoren 130 dienen als Treiber für die Leuchtdioden 132. Die Kondensatoren C1 an der Basis der Darlington-Transistoren 130 verhindern ein sofortiges Erlöschen der Leuchtdioden 132. Durch die Widerstände R53 wird der maximale Strom durch die Leuchtdioden 132 begrenzt. Die Eingänge X der Analogmultiplexer 122 und 124 sind mit dem als Komparator geschalteten Ausgang des Operationsverstärkers 134 verbunden. Dabei dient die Referenzspannung am invertierenden Eingang des Operationsverstärkers 134, die über das Potentiometer P4 erzeugt wird, als Vergleichsspannung zur Abstandsmessung. Die Ausgangsspannung u4 des Analogdividierers liegt am nichtinvertierenden Eingang des Operationsverstärkers 134 an. Überschreitet die Ausgangsspannung u4 des Analogdividierers die Vergleichsspannung, leuchtet die dem entsprechenden Messer 24 zugeordnete Leuchtdiode 132 auf. Auf diese Art läßt sich feststellen, ob eines der Messer 24 einen bestimmten Mindestabstand zur Gegenschneide 12 unterschreitet. Durch eine Invertierung der am Ausgang des Operationsverstärkers 134 anliegenden Spannung ließe sich ein zu großer Abstand der Messer 24 zur Gegenschneide 12 feststellen, beispielsweise nach starker Abnutzung.

Die Bestandteile des Auswertekreises, wie beispielsweise die Vorrichtung zur Takterzeugung, zur Bandpaßfilterung 26 oder zur Signalspeicherung können auch in anderer Form ausgestaltet sein um den in Figur 2 skizzierten Ablauf zur induktiven Abstandsmessung zu realisieren. Beispielsweise können andere passive oder aktive Filter höherer Ordnung zum Einsatz kommen und die Signalspeicherung kann grundsätzlich ausgelöst werden durch Pulse, die von einem mit der rotierenden Schneidtrommel verbundenen Taktgeber stammen und von den an der Induktionsspule empfangenen Signalen unabhängig sind. Bei Verwendung anderer elektronischer Bauteile, z. B. der Operationsverstärker, sind die Versorgungsspannungen entsprechend anzugleichen.

Die oben beschriebenen Elemente des Auswertekreises können auch durch digitale Signalprozessoren erweitert werden, die eine Analyse der Signalformen zulassen. Dazu erfolgt eine Konvertierung der verstärkten Signale in digitale Signale. Die Erfindung soll diese Möglichkeit der Signalauswertung einschließen.

Die Anwendung der Erfindung erstreckt sich auf Schneidevorrichtungen, die mindestens ein Messer 24 und eine Gegenschneide 12 enthalten, beispielsweise Häckselgeräte für Gemüse und Tabak, Maschinen zum Schneiden von Metallen u. ä.

## Patentansprüche

1. Einrichtung zum Überwachen des Abstandes zwischen einem ersten Teil (12) und einem zweiten Teil (24), die relativ zueinander beweglich sind, wobei der zweite Teil (24), zu dem der Abstand zu messen ist, aus magnetisch leitendem Material besteht und der erste Teil (12) wenigstens einen Permanentmagneten (16) und eine Induktionsspule (18) zur Erzeugung eines dem Abstand entsprechenden elektrischen Signals aufweist, das einem Auswertekreis zugeführt wird, **dadurch gekennzeichnet, daß** der Auswertekreis so ausgebildet ist, daß er das Signal in einen hoch- und einen tieffrequenten Anteil zerlegt und daraus einen Quotienten bildet.

2. Einrichtung nach Anspruch 1, **dadurch gekennzeichnet, dass** der erste Teil eine Gegenschneide (12) ist, und dass der zweite Teil ein Messer (24) einer rotierenden Schneidtrommel (142) ist.

3. Einrichtung nach Anspruch 1 oder 2, **dadurch gekennzeichnet, daß** mehrere Permanentmagnete (16) mit Abstand zur Schneidfläche (22) der Gegenschneide (12) auf oder unter dieser angebracht sind oder ganz oder teilweise in ihr versenkt sind.

4. Einrichtung nach einem der Ansprüche 1 bis 3, **dadurch gekennzeichnet, daß** das an der Induktionsspule (18) abgegriffene Signal vor dem Zerlegen in einen hoch- und tieffrequenten Anteil verstärkt wird, wobei insbesondere der Verstärker mit der Induktionsspule (18) vergossen ist.

5. Einrichtung nach einem der vorhergehenden Ansprüche, **dadurch gekennzeichnet, daß** die Grenzfrequenzen für die Filterung der hoch- und tieffrequenten Signalanteile von der Relativgeschwindigkeit zwischen dem ersten Teil und dem zweiten Teil abhängig sind.

6. Einrichtung nach einem oder mehreren der vorhergehenden Ansprüche, **dadurch gekennzeichnet, daß** die im Auswertekreis weiter verarbeiteten hoch- und tieffrequenten Signalanteile über Bandpaßfilter (26) herausgefiltert werden.

7. Einrichtung nach einem oder mehreren der vorhergehenden Ansprüche, **dadurch gekennzeichnet, daß** der Auswertekreis die hoch- und tieffrequenten Signalanteile in einem Spitzenwertspeicher festhält und die Speicherung im Takt mit dem Auftreten der Spannungspulse betrieben wird.

8. Einrichtung nach einem oder mehreren der vorhergehenden Ansprüche, **dadurch gekennzeichnet, daß** der Auswertekreis über eine Dividierschaltung verfügt, die den Quotienten aus den analogen oder in digitale Signale konvertierten hoch- und niederfrequenten Signalanteilen bildet.

9. Einrichtung nach Anspruch 8, **dadurch gekennzeichnet, daß** die Dividierschaltung ein Analogdividierer ist und daß der Auswertekreis eine Vorrichtung aufweist, die die Ausgangsspannung (u4) der Dividierschaltung mit einer beispielsweise über ein Potentiometer (P4) einstellbaren Vergleichsspannung vergleicht.

10. Einrichtung nach Anspruch 9, **dadurch gekennzeichnet, daß** der Auswertekreis eine Wameinrichtung in Gang setzt, wenn die Ausgangsspannung (u4) der Dividierschaltung von der Vergleichsspannung um ein bestimmtes Maß abweicht.

11. Feldhäcksler (140), **dadurch gekennzeichnet, daß** der Abstand von an einer Schneidtrommel (142) befestigten Messern (24) zu einer Gegenschneide (12) mit einer Einrichtung gemäß einem der Ansprüche 1 bis 10 überprüft oder gemessen wird.

12. Feldhäcksler (140) nach Anspruch 11, **dadurch gekennzeichnet, daß** gegenüber jeder Messerreihe der Schneidtrommel (142) eine Einrichtung nach einem der Ansprüche 1 bis 12 mit mindestens einem Permanentmagneten (16) und einer Induktionsspule (18) längs der Gegenschneide (12) angeordnet ist.

## Claims

1. A device for monitoring the distance between a first part (12) and a second part (24) which are movable relative to one another, wherein the second part (24), to which the distance is to be measured, consists of magnetically conductive material and first part (12) comprises at least one permanent magnet (16) and an induction coil (18) for generating an electric signal corresponding to the distance, which signal is fed to an evaluating circuit, **characterized in that** the evaluating circuit is so designed that it splits the signal into high and low frequency components and forms a quotient therefrom.

2. A device according to claim 1, **characterized in that** the first part is a shear bar (12) and **in that** the second part is blade (24) of a rotating cutting cylinder (142).

3. A device according to claim 1 or 2, **characterized in that** a plurality of permanent magnets (16) are fitted on or under or wholly or partially sunk into the shear bar (12), spaced from the cutting surface (22) thereof.

4. A device according to any of claims 1 to 3, **characterized in that** the signal picked off at the induction coil (18) is amplified before it is split into high and low frequency components, the amplifier in particular being potted with the induction coil (18).

5. A device according to any of the preceding claims, **characterized in that** the limit frequencies for filtering the high and low frequency signal components are dependent on the relative speed between the first and second parts.

6. A device according to one or more of the preceding claims, **characterized in that** the high and low frequency signal components further processed in the evaluating circuit are filtered out by bandpass filters (26).

7. A device according to one or more of the preceding claims, **characterized in that** the evaluating circuit stores high and low frequency signal components in a peak value memory and the storage is effected in step with the occurrence of the voltage pulses.

8. A device according to one or more of the preceding claims, **characterized in that** the evaluating circuit utilises a divider circuit which forms the quotient of the analog high and low frequency signal components or these converted into digital signals.

9. A device according to claim 8, **characterized in that** the divider circuit is an analog divider and **in that** the evaluating circuit comprises a device which compares the output voltage (u4) of the divider circuit with a comparison voltage adjustable by means of a potentiometer (P4) for example.

10. A device according to claim 9, **characterized in that** the evaluating circuit actuates a warning device when the output voltage (u4) of the divider circuit deviates from the comparison voltage by a specific amount.

11. A forage harvester (140), **characterized in that** the distance from blades (24) fixed to a cutting drum (142) to a shear bar (12) is checked or measured with a device according to any of claims 1 to 10.

12. A forage harvester according to claim 11, **characterized in that** a device according to any of claims 1 to 10 with at least one permanent magnet (16) and an induction coil (18) is arranged along the shear bar (12) opposite each blade row of the cutting drum (142).

## Revendications

1. Dispositif pour surveiller la distance entre une première pièce (12) et une deuxième pièce (24), qui sont mobiles l'une par rapport à l'autre, dans lequel la deuxième pièce (24), par rapport à laquelle la distance doit être mesurée, se compose d'une matière magnétiquement conductrice et la première pièce (12) présente au moins un aimant permanent (16) et une bobine d'induction (18) pour produire un signal électrique correspondant à la distance, qui est envoyé à un circuit d'évaluation, **caractérisé en ce que** le circuit d'évaluation est configuré de telle façon qu'il décompose le signal en une partie à haute fréquence et une partie à basse fréquence et qu'il forme un quotient de celles-ci.

2. Dispositif selon la revendication 1, **caractérisé en ce que** la première pièce est une contre-lame (12) et **en ce que** la deuxième pièce est un couteau (24) d'un tambour de coupe tournant (142).

3. Dispositif selon la revendication 1 ou 2, **caractérisé en ce que** plusieurs aimants permanents (16) sont installés à distance de la face de coupe (22) de la contre-lame (12) sur ou en dessous de celle-ci et sont entièrement ou partiellement enfoncés dans celle-ci.

4. Dispositif selon l'une quelconque des revendications 1 à 3, **caractérisé en ce que** le signal capté à la bobine d'induction (18) est amplifié avant la décomposition en une partie à haute fréquence et une partie à basse fréquence, l'amplificateur étant en particulier moulé avec la bobine d'induction (18).

5. Dispositif selon l'une quelconque des revendications précédentes, **caractérisé en ce que** les fréquences limites pour le filtrage des parties de signal à haute fréquence et à basse fréquence dépendent de la vitesse relative entre la première pièce et la deuxième pièce.

6. Dispositif selon une ou plusieurs des revendications précédentes, **caractérisé en ce que** les parties de signal à haute fréquence et à basse fréquence traitées dans le circuit d'évaluation sont extraites par des filtres passe-bande (26).

7. Dispositif selon une ou plusieurs des revendications précédentes, **caractérisé en ce que** le circuit d'évaluation fixe les parties de signal à haute fréquence et à basse fréquence dans une mémoire de valeurs de crête et la mise en mémoire est effectuée en synchronisme avec la survenance des impulsions de tension.

8. Dispositif selon une ou plusieurs des revendications précédentes, **caractérisé en ce que** le circuit d'évaluation dispose d'un circuit diviseur, qui forme le quotient des parties de signal - analogiques ou converties en signaux numériques - à haute fréquence et à basse fréquence.

9. Dispositif selon la revendication 8, **caractérisé en ce que** le circuit diviseur est un diviseur analogique et **en ce que** le circuit d'évaluation présente un dispositif, qui compare la tension de sortie (u4) du circuit diviseur avec une tension de comparaison réglable par exemple au moyen d'un potentiomètre (P4).

10. Dispositif selon la revendication 9, **caractérisé en ce que** le circuit d'évaluation met en marche un dispositif de surveillance, lorsque la tension de sortie (u4) du circuit diviseur diffère de la tension de comparaison dans une mesure déterminée.

11. Ramasseuse-hacheuse (140), **caractérisée en ce que** la distance de couteaux (24) fixés sur un tambour de coupe (142) par rapport à une contre-lame (12) est contrôlée ou mesurée avec un dispositif selon l'une quelconque des revendications 1 à 10.

12. Ramasseuse-hacheuse (140) selon la revendication 11, **caractérisée en ce qu'**un dispositif selon l'une quelconque des revendications 1 à 11 avec au moins un aimant permanent (16) et une bobine d'induction (18) est disposé le long de la contre-lame (12) en face de chaque rangée de couteaux du tambour de coupe (142).
